# EUROPEAN PATENT APPLICATION

(11) **EP 3 242 439 A1**
(43) Date of publication of application: **08.11.2017**
(21) Application number: 17162089.1
(22) Date of filing: 21.03.2017
(51) Int. Cl.: H04L 12/18, H04L 29/08, H04L 29/06, G06F 11/07, G06F 11/30

(54) **METHOD FOR REMOTELY CONTROLLING SERVER AND ASSOCIATED COMPUTER PROGRAM PRODUCT**

(30) Priority: 05.05.2016 TW 105114038
(71) Applicant: Synology Incorporated, Taipei 103 (TW)
(72) Inventor: Wu, Chi-Cheng, 104 Taipei City (TW)
(74) Representative: Becker Kurig Straus

(57) **Abstract**

A method for remotely controlling a server (120) includes: receiving a push message, in which the push message represents that an operation of the server (120) is suspended; showing a control interface on a screen of a cellular phone (110) when receiving a user's click command; and when receiving a user's control command from the control interface, transmitting a control signal to the server (120) according to the user's control command, in which the control signal is used to inform the server (120) about a following strategy of the operation, to make the server (120) continue performing the operation or terminate the operation.

## Description

The present invention relates to a method for remotely controlling a server, and more particularly to a method for providing an immediate command feedback mechanism for a long period task and an associated computer program product according to the pre-characterizing clauses of claims 1 and 7.

When a user uses a computer/server to execute a task which requires a long period of time, the user must wait in front of the computer/ server to assure the task has been completed. Otherwise, if any problem occurs during the task which requires a user's intervention, the problem cannot be fixed. In such cases, the computer/server will usually stop executing the task. In other words, if the user wants to make sure the task can be completed successfully, a long wait in front of the computer is necessary which causes an inconvenient experience for the user.

One of the objectives of the present invention is therefore to provide an immediate command feedback mechanism for a long period task to solve the abovementioned problem.

According to an embodiment of the present invention, a computer program product is disclosed, in which the computer program product is installed in a storage element of a cellular phone, and when a processor of the cellular phone executes the computer program product, the cellular phone performs an interaction with a server. The interaction includes: receiving a push information, in which the push information represents that an operation of the server is suspended; displaying a control interface on a screen of the cellular phone when a user's click command is received; and when receiving a user's control command from the control interface, transmitting a control signal to the server according to the user's control command, in which the control signal is arranged to inform the server of a following strategy of the operation to make the server continue performing the operation or terminate the operation.

According to another embodiment of the present invention, a method for remotely controlling server is disclosed, comprising: receiving a push message, in which the push message represents that an operation of the server is suspended; displaying a control interface of a screen of a cellular phone when a user's click command is received; and when receiving a user's control command from the control interface, transmitting a control signal to the server according to the user's control command, in which the control signal is arranged to inform the server of a following strategy of the operation to make the server continue performing the operation or terminate the operation.

In the following, the invention is further illustrated by way of example, taking reference to the accompanying drawings. Thereof
- FIG. 1: is a diagram illustrating the architecture of a system according to an embodiment of the present invention,
- FIG. 2: is a diagram illustrating a push message received by a cellular phone,
- FIG. 3: is a diagram illustrating a control interface of a cellular phone according to an embodiment of the present invention,
- FIG. 4: is a diagram illustrating a control interface of a cellular phone according to another embodiment of the present invention,
- FIG. 5: is a diagram illustrating a control interface of a cellular phone according to yet another embodiment of the present invention, and
- FIG.: 6 is a flowchart illustrating a method for remotely controlling a server according to an embodiment of the present invention.

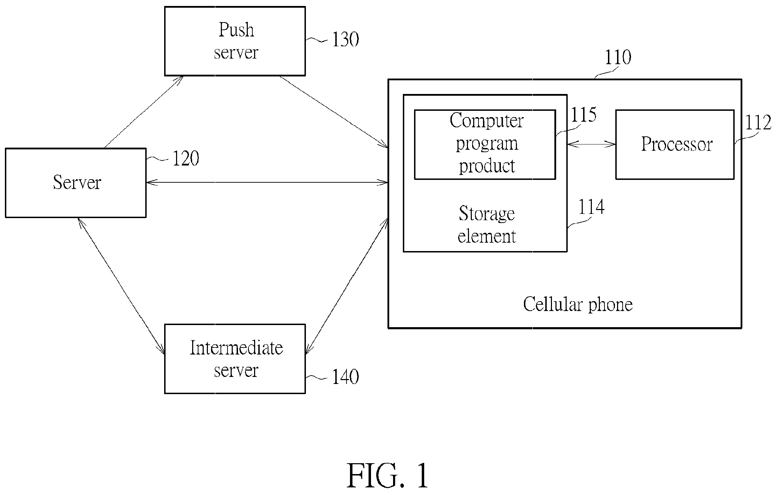

FIG. 1 is a diagram illustrating the architecture of a system according to an embodiment of the present invention. As shown in FIG. 1, the system includes a cellular phone 110, a server 120, a push server 130 and an intermediate server 140, in which the cellular phone 110 at least includes a processor 112 and a storage element 114 storing a computer program product 115. In this embodiment, the cellular phone 110 can be a mobile electronic device with communication and network function, e.g. a smart phone. The computer program product 115 stored in the storage element 114 can be a mobile application (APP) downloaded from another server, and the operation of the following embodiments of the present invention can be done by executing the computer program product 115 via the processor 112. In addition, the cellular phone 110, the server 120, the push server 130 and the intermediate server 140 connect via a Local Area Network (LAN) or the Internet.

In this embodiment, the server 120 can be an all-in-one server which can be a data server, a webpage server, a Remote Authentication Dial-In User Service (RADIUS) server, a remote access virtual private network server, a proxy server, etc. For example, the server may be a Network Attached Storage (NAS) server provided by Synology™; in addition, the intermediate server 140 can act as an intermediary when the cellular phone 110 cannot connect with the server 120. The push server 130 can be used to receive a push message requisition, and transmit a push message to a designated cellular phone.

In the operation of the system shown in FIG. 1, the user initially downloads and installs a dedicated application (APP) with the cellular phone 110, and executes the dedicated APP to bind with the server 120. For example, after executing the dedicated APP designed for the server 120, the cellular phone 110 connects with a log in page of the server 120. After the user keys in the correct user's name and password, the server 120 records the relevance with the cellular phone 110.

Next, when the user controls the server 120 via the electronic device such as a desktop or laptop to execute an operation which needs a long period to complete, and when the operation is suspended to wait for the user to confirm the following strategy, the server 120 makes the push server 130 transmit a push message to the cellular 110 indicating that the operation of the server is now suspended. The user can click the push message on the cellular phone 110, and the dedicated APP thus displays a control interface on the screen. When the user clicks on the control interface or inputs a control command, the cellular phone 110 transmits a control signal to the server 120 directly or via the intermediate server 140, in which the control signal is arranged to inform the server 120 of the following strategy of the operation to make the server 120 continue performing the operation or terminate the operation.

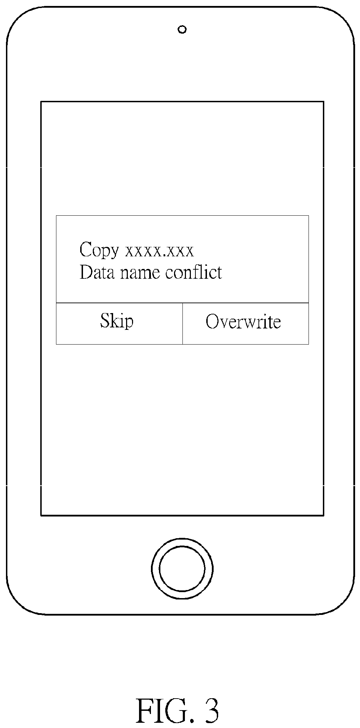

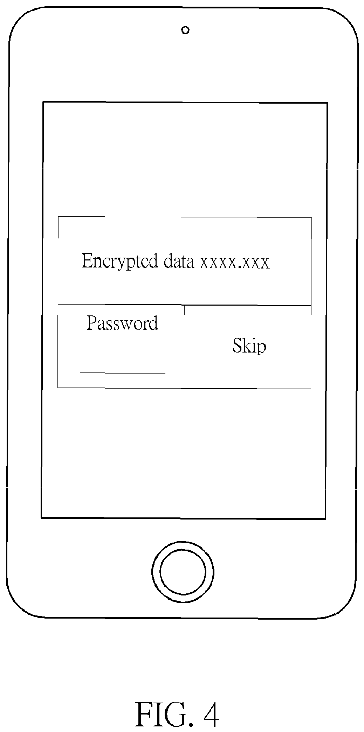

Through the above operation, the user can learn the status of the operation of the server 120 immediately from the push message, and also can remotely control the following operation of the server 120 via the dedicated APP. The user can learn if the operation of the server 120 is suspended via the cellular phone 110 which is usually carried by the user, rather than having to wait by the computer. In addition, the user can control the following operation of the server 120 via the cellular phone 110; hence, the server 120 does not need to be idle for a long period of time, and the efficiency can be greatly improved. As users know how to use an APP, the above operation is quite easy. The control interface shown in the screen of the cellular phone 110 by the dedicated APP is similar to the interface shown in the computer/server (shown in FIG. 3 to FIG. 5), thus the user can control the server 120 by simply clicking or keying in the control command.

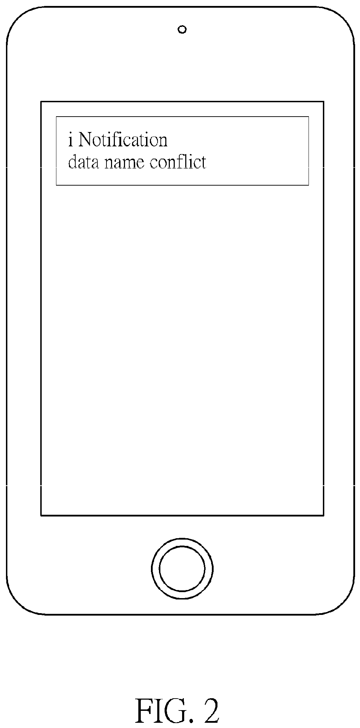

In an embodiment, assume the user controls the server 120 to perform data copy (for example, copying a plurality of external data into the server 120). If data name conflict occurs during the process of data copy (i.e. the server 120 has data with the same data name already), then the server 120 suspends the data copy operation and makes the push server 130 transmit the push message to the cellular phone 110 to indicate that the data copy operation is suspended due to the data name conflict, in which the push message received by the cellular phone 110 is shown in FIG. 2. Next, when the user clicks the push message shown in FIG. 2, the dedicated APP displays the control interface shown in FIG. 3 on the screen of the cellular phone 110, in which the control interface includes options for the following operations for the user. If the user clicks the "skip" option shown in FIG. 3, the cellular phone 110 transmits the control signal to the server 120 directly or via the intermediate server 140. After the control signal is received, the server 120 skips the current data (i.e. the data with the same name saved in the server 120 will not be overwritten), and continues copying the next data. If the user clicks the "overwrite" option shown in FIG. 3, the cellular phone 110 transmits the control signal to the server 120 directly or via the intermediate server 140. After the control signal is received, the server 120 continues copying data, i.e. the data with the same name saved in the server 120 is overwritten.

Through the above embodiment, when the user controls the server to perform data copy which needs a long period of time to complete, the server 120 can transmit the push message to the cellular phone 110 via the push server 130 when a situation occurs, and the user can remotely control the following operation of the server 120 via the dedicated APP of the cellular phone 110. Therefore, it is not necessary for the user to wait by the computer to make sure the data copy is completed successfully, which improves the user's experience.

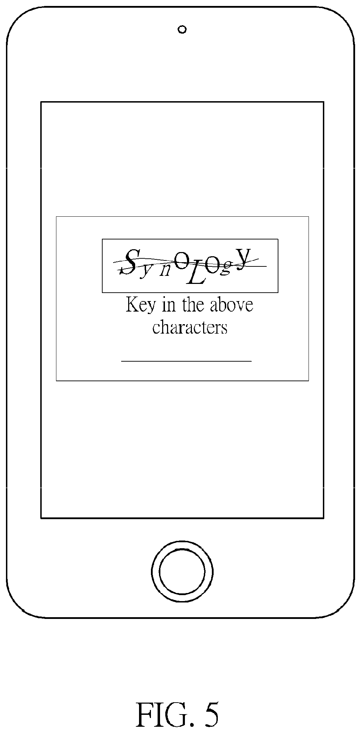

In another embodiment, assume the user controls the server 120 to perform remote download (for example, download a plurality of data to the server 120 from other cloud servers). If verification characters or a verification image is shown to request a corresponding input during the file download process (e.g. a CAPTCHA request for preventing a robot), the server 120 suspends the data download operation, and makes the push server 130 transmit the push message to the cellular phone 110 to indicate that the data download operation is suspended due to the verification character request. Next, when the user clicks the push message, the dedicated APP displays the control interface shown in FIG. 5 on the screen of the cellular phone 110, in which the control interface can display the image of the verification characters, and also provide a column for the user's input. If the user inputs the characters shown in the verification image, the cellular phone 110 transmits the control signal with the characters inputted by the user to the server 120 directly or via the intermediate server 140. The server 120 processes the verification character request with the received characters after receiving the control signal to facilitate the data download.

In another embodiment, assume the user controls the server 120 to perform disk inspection. If a bad sector occurs during the process of disk inspection, the server suspends the disk inspection operation and makes the push server 130 transmit the push message to the cellular phone 110 to indicate that the disk inspection is suspended due to the bad sector. Next, when the user clicks the push message, the control interface is shown on the screen of the cellular phone 110, in which the control interface can includes options for the following operation for the user, e.g. skip, or terminate. When the user clicks one of the options on the control interface, the cellular phone 110 transmits the control signal to the server 120 directly or via the intermediate server 140. After the control signal is received, the server 120 skips the current disk sector to proceed with the disk inspection or terminate the disk inspection according to the user's choice.

It should be noted that the interface and related options shown in FIG. 2 to FIG. 5 are only for illustrative purposes, and are not limitations of the present invention. In another embodiment, the control interface shown in FIG. 3 to FIG. 5 can include more options for the user to remotely control the server 120 via the cellular phone 110 in a more flexible manner.

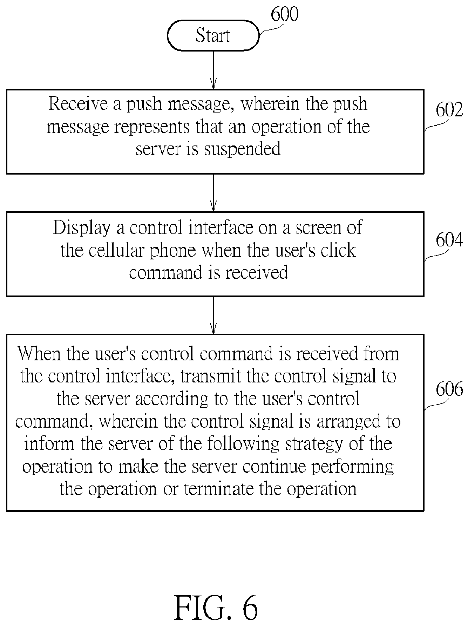

FIG. 6 is a flowchart illustrating a method for remotely controlling the server 120 according to an embodiment of the present invention. Referring to the operation in accordance with FIG. 1 to FIG. 5, the flow shown in FIG. 6 as follows:
Step 600: start.
Step 602: receive a push message, in which the push message represents that an operation of the server is suspended.
Step 604: display a control interface on a screen of the cellular phone when the user's click command is received.
Step 606: when the user's control command is received from the control interface, transmit the control signal to the server according to the user's control command, in which the control signal is arranged to inform the server of the following strategy of the operation to make the server continue performing the operation or terminate the operation.

Briefly summarized, in the method for remotely controlling a server and the related computer program product as disclosed by the present invention, the server transmits a push message to the user's cellular phone via the push server when a situation occurs which requires confirmation from the user to proceed with a further operation. The user can learn the operating status of the server via the push message, and can further remotely control the server via the dedicated APP to make the server continue performing the operation or terminate the operation. Through the immediate reaction feedback mechanism, it is not necessary for the user to wait by the computer for a long period of time to ensure the server can complete the task successfully, which improves the user's experience.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A computer program product (115), installed in a storage element (114) of a cellular phone (110), wherein when a processor (112) of the cellular phone (110) executes the computer program product (115), the cellular phone (110) performs an interaction with a server (120), and the interaction **characterized by**:
receiving a push message, wherein the push message represents that an operation of the server (120) is suspended;
displaying a control interface on a screen of the cellular phone (110) when receiving a user's control command; and
when receiving the user's control command from the control interface, transmitting a control signal to the server (120) according to the user's control command, wherein the control signal is arranged to inform the server (120) of a following strategy of the operation to make the server (120) continue performing the operation or terminate the operation.

2. The computer program product (115) of claim 1, **characterized in that** the operation is a data copy operation, a decompress operation, a remote download operation or a disk inspection operation.

3. The computer program product (115) of claim 2, **characterized in that** when the operation is the data copy operation and the operation is suspended due to a data name conflict, the control signal is arranged to indicate the server (115) to overwrite a data with the same name, or skip/not overwrite the data with the same name to make the server continue performing the operation or terminate the operation.

4. The computer program product (115) of claim 2, **characterized in that** when the operation is the decompress operation and the operation is suspended due to an encrypted data, the control signal is arranged to inform the server (120) of a needed password, or indicate the server (120) to skip the decompress operation regarding the current data to make the server (120) continue performing the operation.

5. The computer program product (115) of claim 2, **characterized in that** when the operation is the remote download operation and the operation is suspended due to a verification characters/a verification image, the control signal is arranged to inform the server (115) of needed characters to make the server (115) continue performing the operation.

6. The computer program product (115) of claim 1, **characterized in that** the interaction further comprising:
connecting and logging into the server (115) to make the cellular phone (110) bind with the server (115); and
wherein the step of transmitting the control signal to the server (120) comprises:
transmitting the control signal directly or via an intermediate server (140) to the server (120).

7. A method for remotely controlling a server (120), **characterized by**:
receiving a push message, wherein the push message represents that an operation of the server (120) is suspended;
displaying a control interface on a screen of a cellular phone (110) when receiving a user's control command; and
when receiving the user's control command from the control interface, transmitting a control signal to the server (120) according to the user's control command, wherein the control signal is arranged to inform the server (120) of a following strategy of the operation to make the server (120) continue performing the operation or terminate the operation.

8. The method claim 7, **characterized in that** the operation is a data copy operation, a decompress operation, a remote download operation or a disk inspection operation.

9. The method of claim 8, **characterized in that** when the operation is the data copy operation and the operation is suspended due to a data name conflict, the control signal is arranged to indicate the server to overwrite a data with the same name, or skip/not overwrite the data with the same name to make the server continue performing the operation or terminate the operation.

10. The method of claim 8, **characterized in that** when the operation is the decompress operation and the operation is suspended due to an encrypted data, the control signal is arranged to inform the server (120) of a needed password, or indicate the server (120) to skip the decompress operation regarding the current data to make the server (120) continue performing the operation.

11. The method of claim 8, **characterized in that** when the operation is the remote download operation and the operation is suspended due to a verification characters /a verification image, the control signal is arranged to inform the server (120) of needed characters to make the server (120) continue performing the operation.

12. The method of claim 7, **characterized in that** the method further comprising:
connecting and logging into the server (120) to make the cellular phone (110) bind with the server (120); and
wherein the step of transmitting the control signal to the server (120) comprises:
transmitting the control signal directly or via an intermediate server (140) to the server (120).
